# FASCICULE DE BREVET EUROPEEN

(11) **EP 3 501 980 B1**
(45) Date de publication et mention de la délivrance du brevet: **29.04.2020**
(21) Numéro de dépôt: 18198072.3
(22) Date de dépôt: 02.10.2018
(51) Int. Cl.: B64C 11/36, B64C 27/605, B64C 27/82

(54) **ROTOR A PAS COLLECTIF VARIABLE ET AERONEF**
ROTOR MIT KOLLEKTIVER BLATTVERSTELLUNG, UND LUFTFAHRZEUG
ROTOR WITH VARIABLE COLLECTIVE PITCH AND AIRCRAFT

(30) Priorité: 31.10.2017 FR 1771154
(43) Date de publication de la demande: 26.06.2019
(73) Titulaire: Airbus Helicopters, 13725 Marignane Cedex (FR)
(72) Inventeur: BERTHALON, Sylvain, 13880 Velaux (FR)
(74) Mandataire: GPI & Associés

(56) Documents cités:
- EP-A1- 0 545 750
- EP-A1- 1 900 631
- EP-A1- 3 023 328

## Description

La présente invention concerne un rotor muni de pales à pas collectif variable et un aéronef muni de ce rotor.

Le projet menant à cette demande de brevet a reçu un financement du programme de recherche et d'innovation Horizon 2020 de l'Union européenne, dans le cadre de la convention de subvention CleanSky 2 N° « GAM-FRC-2014-001 Issue E ».

Un tel rotor peut par exemple être un rotor participant au moins partiellement au contrôle du mouvement en lacet d'un giravion. Un tel rotor peut aussi par exemple être un propulseur à hélice d'un aéronef ou encore d'un navire. A titre illustratif, le rotor peut ainsi être un propulseur à hélice d'un aéronef, et par exemple d'un aéronef hybride pourvu d'au moins un rotor de sustentation et d'au moins un propulseur à hélice.

L'expression « rotor à pas collectif variable » peut désigner un tel rotor par commodité.

Un rotor à pas collectif variable peut être muni d'un moyeu qui est relié mécaniquement à une installation motrice. Plus précisément, ce moyeu est fixé à un mât rotor mis en mouvement par l'installation motrice. L'installation motrice met alors en rotation le mât rotor et le moyeu autour d'un axe de rotation du rotor.

Des pales sont articulées à ce moyeu afin notamment d'être mobiles en rotation par rapport au moyeu autour d'axes de variation de pas respectifs sensiblement radiaux. Dès lors, les pales sont d'une part mobiles en rotation conjointement avec le moyeu autour de l'axe de rotation du rotor et, d'autre part, mobiles en rotation par rapport au moyeu autour de leurs axes de variation de pas respectifs.

La poussée générée par le rotor à pas collectif variable peut alors être contrôlée par une variation collective du pas des pales. A cet effet, le rotor à pas collectif variable est équipé d'un mécanisme de manœuvre pour manœuvrer de la même manière et en même temps les pales autour de leurs axes de variation de pas respectifs.

Selon une réalisation présente sur l'hélicoptère connu sous la dénomination 332MK1, un tel mécanisme de manœuvre est parfois qualifié de « araignée ». Ce mécanisme de manœuvre comprend une tige de commande montée mobile en translation dans le mât rotor. Cette tige de commande est commandée par des commandes actionnables par un pilote et/ou un système de pilotage automatique.

La tige de commande peut traverser longitudinalement un orifice central du moyeu pour atteindre un plateau de commande. Le plateau de commande est monté tournant sur la tige de commande. Ce plateau de commande comprend un corps central et de multiples bras formant une étoile. Chaque bras est articulé par une rotule à une bielle de pas, la bielle de pas étant articulée par une autre rotule à un levier de pas d'une pale.

En outre, le mécanisme de manœuvre comprend un tube de guidage qui s'étend autour de la tige de commande. Ce tube de guidage s'étend d'une première zone extrémale jusqu'à une deuxième zone extrémale. La première zone extrémale est solidarisée au plateau de commande. La deuxième zone extrémale s'étend dans l'orifice central du moyeu pour être solidaire en rotation du moyeu. Ainsi, la deuxième zone extrémale présente des cannelures en prises avec des cannelures du moyeu.

Ces dispositions sont telles qu'une manœuvre en translation de la tige de commande par un pilote provoque une variation collective du pas des pales.

Par ailleurs, les efforts pour mouvoir collectivement en pivotement les pales peuvent être importants. Ces efforts sont d'autant plus importants sur un propulseur à hélice requérant une variation de pas des pales sur une plage étendue.

En effet et en raison des rotules, la translation du plateau de commande tend à induire une inclinaison des bielles de pas. Cette inclinaison tend à induire la création d'efforts parasites tangentiels qui génèrent un moment. Ce moment tend à faire tourner le plateau de commande autour de l'axe de rotation. Ce mouvement rotatif est néanmoins stoppé par les cannelures du moyeu contre lesquelles appuient les cannelures du tube de guidage. Toutefois, les cannelures du moyeu frottent alors fortement contre les cannelures du tube de guidage. Il en résulte la création d'efforts de frottement importants entre le moyeu et le mécanisme de manœuvre qui ne peuvent être vaincus qu'en exerçant un effort de commande relativement important sur la tige de commande.

Sur un hélicoptère, les amplitudes du pas des pales sont relativement faibles. Par suite, l'utilisation de cannelures peut avoir un impact limité sur les efforts de commande. Par contre, ces efforts de commande peuvent être plus sensiblement augmentés sur un propulseur à hélice.

De manière alternative aux cannelures, un mécanisme de manœuvre peut comporter un compas pour lier en rotation le plateau de commande et le moyeu. Un compas permet de transmettre un couple sans augmentation notable de l'effort de commande requis pour translater la tige de commande. Néanmoins, les articulations d'un compas tendent à s'user ce qui induit des opérations de maintenance régulières. De plus, la masse d'un compas peut être relativement élevée.

L'hélicoptère connu sous la marque écureuil® présente un rotor à pas collectif variable éloigné du rotor de l'hélicoptère 332MK1. En effet, l'hélicoptère écureuil® comprend un rotor à balancier et non pas un rotor rigide. De plus, l'hélicoptère écureuil® comprend un mécanisme de manœuvre qui n'est pas du type « araignée » en étant dépourvu d'un plateau de commande mais est muni deux bielles de pas articulées à un cylindre de commande. Ce cylindre de commande entoure le mât rotor. Le cylindre de commande est relié à une commande par un moyen de renvoi et un roulement à billes.

Les documents FR 2050019 et FR 2589817 sont aussi connus et éloignés de l'invention.

Le document FR 2050019 décrit une installation pour faire varier le pas d'une hélice d'un bateau.

Le document FR 2589817 décrit un dispositif de mise en drapeau des pales d'un avion à hélice.

Les documents EP 3023328, EP 0545750 et EP 1900631 sont aussi connus.

La présente invention a alors pour objet de proposer un rotor à pas collectif variable à plateau de commande innovant tendant à réduire les efforts de commande à fournir pour faire varier collectivement le pas des pales du rotor.

Selon un aspect de l'invention un rotor à pas collectif variable est mobile en rotation autour d'un axe de rotation, le rotor à pas collectif variable comprenant un moyeu, le rotor à pas collectif variable comprenant une pluralité de pales, chaque pale de ladite pluralité de pales étant montée individuellement mobile sur le moyeu au moins en pivotement autour d'un axe de variation de pas. Le rotor à pas collectif variable comprend un mécanisme de manœuvre pour faire varier simultanément voire de la même amplitude un pas de chaque pale de ladite pluralité de pales autour de son axe de variation de pas, le mécanisme de manœuvre comprenant une tige de commande montée mobile en translation par rapport au moyeu, par exemple le long dudit axe de rotation. Le mécanisme de manœuvre comprend un plateau de commande monté tournant, par exemple autour de l'axe de rotation, sur la tige de commande par un mécanisme de roulement. Le mécanisme de manœuvre comprend une pluralité de bielles de pas, chaque bielle de pas de ladite pluralité de bielles de pas étant articulée à un bras du plateau de commande et à un levier de pas d'une dite pale.

Le mécanisme de manœuvre comporte un tube de positionnement angulaire pour positionner angulairement le plateau de commande par rapport au moyeu. Le tube de positionnement angulaire présente un corps qui s'étend d'une première zone extrémale solidaire en rotation et en translation du plateau de commande jusqu'à une deuxième zone extrémale, la deuxième zone extrémale étant insérée dans un orifice du moyeu. Le moyeu et le tube de positionnement angulaire sont liés par une liaison combinée ayant pour fonction d'induire une rotation autour de l'axe de rotation dudit tube de positionnement angulaire et dudit plateau de commande par rapport au moyeu lors d'une translation du tube de positionnement angulaire par rapport au moyeu.

L'expression « montée individuellement mobile sur le moyeu au moins en pivotement autour d'un axe de variation de pas » signifie notamment que chaque pale est portée par le moyeu en étant libre d'effectuer une rotation autour de son propre axe de variation de pas, et éventuellement d'autres mouvements.

Le tube de positionnement angulaire est alors un rapporté sur le plateau de commande. Ce tube de positionnement angulaire peut être positionné de manière à être coaxial avec le moyeu, par exemple en employant des paliers agencés entre la deuxième zone extrémale et le moyeu.

Lorsque la tige de commande déplace en translation le plateau de commande, ladite liaison combinée entraîne la rotation du plateau de commande par rapport au moyeu. L'orientation angulaire du plateau de commande est ainsi liée à sa position axiale par rapport au moyeu. Par suite, les bielles de pas ne tendent pas à s'incliner ce qui tend à minimiser les efforts parasites. Cet agencement particulier permet de modifier l'orientation angulaire du plateau de commande par rapport au moyeu pour maintenir les bielles de pas dans une position privilégiée afin d'au moins minimiser les efforts parasites
Cette architecture peut alors présenter une masse optimisée suite à la suppression ou à la réduction des efforts parasites. En présence d'efforts parasites importants, il peut en effet être nécessaire d'ajouter des pièces ou de surdimensionner certaines pièces pour supporter les conséquences de ces efforts parasites. L'invention tend à éviter ou à limiter ces conséquences.

En outre, cette architecture autorise l'utilisation d'un actionneur positionné dans l'axe de rotation pour manœuvrer la tige de commande, contrairement aux architectures nécessitant des leviers de renvoi soumis aux efforts de commande.

Ce rotor à pas collectif variable peut comporter une ou plusieurs des caractéristiques qui suivent.

Selon un aspect, le mécanisme de roulement est un mécanisme de roulement à billes ou à rouleaux. Plusieurs configurations sont possibles : un roulement à deux rangées de billes, un roulement à deux rangées de rouleaux coniques, deux roulements à une rangée de billes, deux roulements à une rangée de rouleaux coniques...

Selon un aspect, chaque bielle de pas de ladite pluralité de bielles de pas peut être articulée à un dit bras par une première liaison rotule et à un levier de pas par une deuxième liaison rotule.

Selon un aspect, chaque axe d'une bielle de pas de ladite pluralité de bielles de pas peut être parallèle à l'axe de rotation en projection sur un plan tangentiel au cercle centré sur cet axe de rotation.

Selon un aspect, au moins une dite bielle de pas de ladite pluralité de bielles de pas est une bielle à longueur variable.

Une telle bielle à longueur variable offre une faculté de réglage.

Selon un aspect, le tube de positionnement angulaire et la tige de commande peuvent être coaxiaux.

Selon un aspect, le tube de positionnement angulaire et la tige de commande peuvent être centrés sur ledit axe de rotation du rotor.

Selon un aspect, le tube de positionnement angulaire peut entourer la tige de commande, au moins localement.

Selon un aspect, le tube de positionnement angulaire est fixé au plateau de commande et / ou à une cage extérieure dudit mécanisme de roulement.

Selon un aspect, la liaison combinée comporte deux organes de guidage incluant respectivement un rail et un coulisseau engagé sur le rail, un desdits deux organes de guidage étant solidaire du tube de positionnement angulaire et un desdits deux organes étant solidaire du moyeu.

Par ailleurs, la forme d'un rail de la liaison combinée peut par exemple être déterminée afin que les bielles de commande soient toujours parallèles à l'axe de rotation du rotor pour éviter de créer des efforts parasites.

Le rail peut prendre la forme d'une gorge ménagée sur une paroi du moyeu en regard du tube de positionnement angulaire, ou d'une gorge ménagée sur une paroi du tube de positionnement angulaire en regard du moyeu. Au lieu d'une gorge, un rail peut aussi prendre la forme d'une lumière traversant une paroi du moyeu ou du tube de positionnement angulaire.

D'autres types de rails sont envisageables.

Le rail peut coulisser par rapport au coulisseau, ou le coulisseau peut coulisser par rapport au rail.

Par ailleurs, le rail a une forme de haricot.

Une telle forme de haricot est aussi qualifiée de forme de « banane ». Le rail s'étend alors parallèlement à une courbe présentant un changement de direction.

La forme de haricot peut décrire un arc de cercle

La forme du rail est adaptée en fonction de la plage de pas des pales.

Selon un aspect, le rail peut appartenir au tube de positionnement angulaire et ledit coulisseau est solidaire du moyeu.

Selon un aspect et par exemple lorsque le rail à une forme de gorge ou de lumière, le coulisseau peut comporter un pion engagé dans le rail.

Cette architecture minimise le nombre de pièces du système.

Selon un aspect et par exemple lorsque le rail à une forme de gorge ou de lumière, le coulisseau peut comporter un galet engagé dans le rail, le galet étant muni d'une tige centrale entourée d'un anneau tournant.

Eventuellement, le galet peut comporter un roulement à aiguilles interposé entre ladite tige centrale et ledit anneau tournant.

Alternativement, un roulement à billes ou à rouleaux est envisageable.

Dès lors, le galet peut posséder une partie fixe représentée par ladite tige centrale. De plus le galet possède une partie mobile par rapport à cette partie fixe, à savoir l'anneau tournant. Un tel ensemble tend à limiter les frottements entre le coulisseau et le rail et à limiter le phénomène d'usure.

Selon un aspect et par exemple lorsque le rail à une forme de gorge ou de lumière, le rail peut comprendre deux flancs parallèles l'un par rapport à l'autre séparés par une largeur, le coulisseau présentant un diamètre inférieur à la largeur pour être en contact avec au maximum un flanc.

Un jeu est présent entre un flanc du rail et le coulisseau pour permettre le montage et le fonctionnement du système. Ce jeu est favorablement minimisé.

L'invention vise aussi un aéronef qui comporte au moins un rotor à pas collectif variable selon cette invention.

Par exemple, l'aéronef peut être un hélicoptère, le rotor à pas collectif étant un rotor participant au contrôle du mouvement en lacet de cet hélicoptère. Un tel rotor participant au contrôle du mouvement en lacet peut être un rotor communément appelé rotor arrière.

Par exemple, l'aéronef peut être un aéronef hybride qui est muni d'un rotor principal participant au moins à la sustentation de cet aéronef hybride et d'au moins un propulseur à hélice, ledit au moins un rotor à pas collectif variable étant un dit propulseur à hélice.

L'invention et ses avantages apparaîtront avec plus de détails dans le cadre de la description qui suit avec des exemples donnés à titre illustratif en référence aux figures annexées qui représentent :
- les figures 1 et 2, des vues illustrant un rotor à pas collectif variable selon l'invention,
- la figure 3, une coupe d'un rotor à pas collectif variable selon l'invention,
- la figure 4, une vue schématique du tube de positionnement angulaire,
- la figure 5, un schéma illustrant un coulisseau prenant la forme d'un pion,
- la figure 6, une vue illustrant le déplacement d'un coulisseau dans un rail, et
- les figures 7 et 8, des schémas présentant des exemples de véhicules munis d'un rotor à pas collectif variable selon l'invention.

Les éléments présents dans plusieurs figures distinctes sont affectés d'une seule et même référence.

Trois directions X, Y et Z orthogonales les unes par rapport aux autres sont représentées sur certaines figures.

La première direction X est dite longitudinale. La deuxième direction Y est dite transversale. Enfin, la troisième direction Z est dite en élévation.

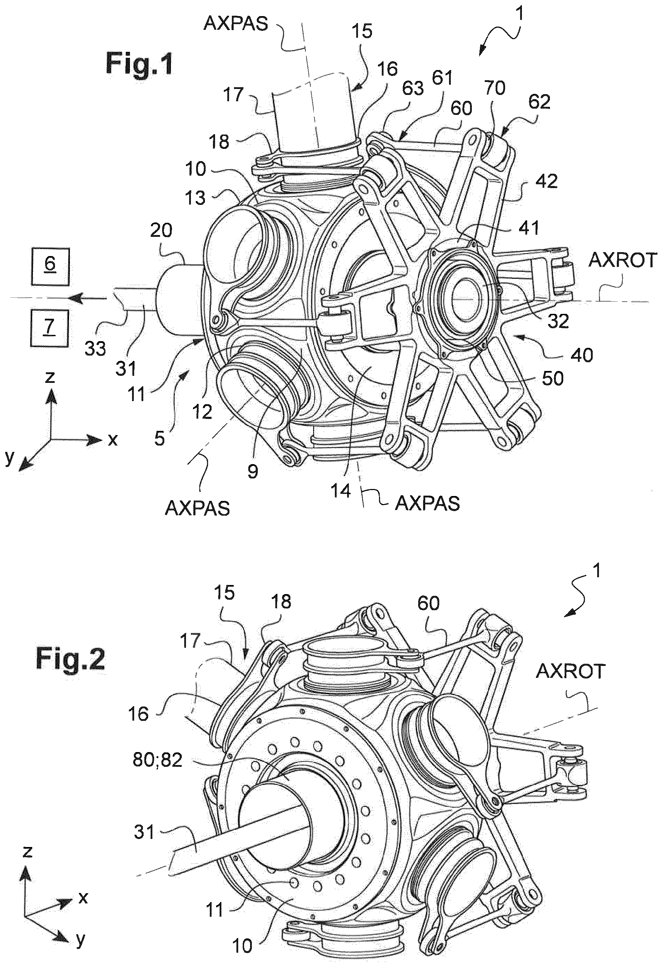

Les figures 1 et 2 présentent un rotor à pas collectif variable 1 selon l'invention.

En référence à la figure 1, ce rotor à pas collectif variable 1 comporte une tête rotor 5 solidaire d'un mât rotor 20. Dès lors, le mât rotor 20 est relié mécaniquement à une installation motrice 6 par une chaîne cinématique. Par suite, l'installation motrice permet d'entraîner la chaîne cinématique pour mettre en rotation la tête rotor 5 autour d'un axe de rotation AXROT.

Cette tête rotor 5 est munie d'un moyeu 10 qui est fixé au mât rotor 20. Par exemple, le mât rotor 20 est fixé à une plaque du moyeu 10 par des vis ou équivalents qui sont vissées dans des perçages 11 de cette plaque. Ainsi, le mât rotor 20 et le moyeu 10 sont solidaires en rotation autour de l'axe de rotation AXROT.

Par ailleurs, la tête rotor 5 comporte une pluralité de pales 15 portées chacune par le moyeu 10, par exemple six pales. Ainsi, chaque pale 15 présente une surface aérodynamique 17 et un pied 16. Les surfaces aérodynamiques 17 ne sont pas représentées par commodité pour ne pas alourdir inutilement les figures. La surface aérodynamique 17 d'une pale 15 peut être attachée au pied 16 de cette pale, ou le pied et la surface aérodynamique d'une pale peuvent former deux tronçons d'une même pièce.

Le pied 16 d'une pale est de plus articulé au moyeu 10 pour au moins conférer une liberté de mouvement en rotation à la pale par rapport au moyeu autour d'un axe de variation de pas AXPAS.

Par exemple, le moyeu 10 est un moyeu rigide, à savoir dépourvu de bras flexibles qui se déforment en battement notamment. Par exemple, le moyeu 10 présente une enceinte creuse munie d'un orifice radial 12 circulaire par pale. Selon l'illustration de la figure 1, le moyeu 10 comporte un fond 13 solidaire du mât rotor 20 et une plaque supérieure 14, le fond 13 étant relié à la plaque supérieure 14 par une paroi latérale 9 comprenant les orifices radiaux 12. Le fond 13, la paroi latérale 9 et la plaque supérieure 14 peuvent former une ou plusieurs pièces mécaniques fixées les unes aux autres. Dès lors, chaque pied 16 est inséré dans un tel orifice radial 12 circulaire du moyeu. Eventuellement, un palie lisse ou élastomère r, un roulement à billes ou à rouleaux, ou équivalent est interposé entre le pied et le pourtour d'un orifice radial.

Dans ces conditions, le rotor à pas collectif variable 1 est muni d'un mécanisme de manœuvre 30. Ce mécanisme de manœuvre 30 a pour fonction de faire varier simultanément, voire de la même manière, le pas de chaque pale 15 autour de son propre axe de variation de pas AXPAS. Chaque axe de variation de pas AXPAS peut être sensiblement radial au regard d'un cercle centré sur l'axe de rotation AXROT .

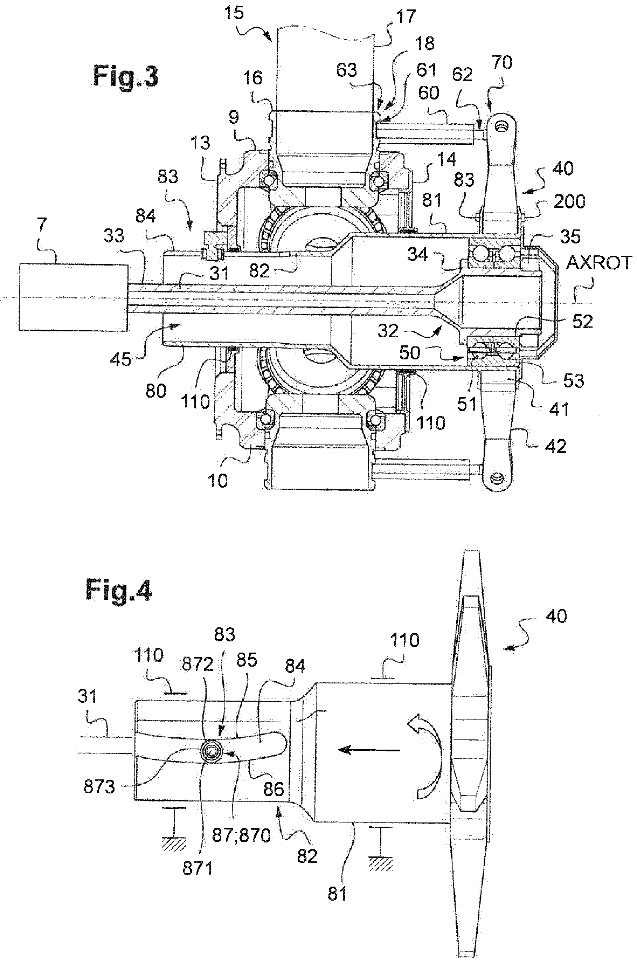

La figure 3 illustre un tel mécanisme de manœuvre 30.

Ce mécanisme de manœuvre 30 comprend une tige de commande 31 montée mobile en translation par rapport au moyeu 10. La tige de commande 31 peut s'étendre d'une première extrémité 32 jusqu'à une deuxième extrémité 33 le long de l'axe de rotation AXROT, cet axe de rotation AXROT pouvant être un axe de symétrie de la tige de commande 31.

En outre, la deuxième extrémité 33 de la tige de commande 31 est reliée mécaniquement à une commande apte à déplacer en translation la tige de commande 31 le long de l'axe de rotation AX ou parallèlement à cet axe de rotation AX. Par exemple, un actionneur linéaire 7 disposé selon l'axe de rotation AX est en prise mécanique sur la tige de commande 31. Cet actionneur linéaire peut être commandé par des commandes d'un pilote et/ou un système de pilotage automatique. Un tel actionneur peut être une servocommande, un actionneur électrique....

Par ailleurs, la tige de commande 31 peut traverser de part en part le moyeu 10 selon un sens allant du fond 13 à la plaque supérieure 14. Par exemple, la tige de commande 31 passe au travers d'un orifice 45 du moyeu sensiblement centré sur l'axe de rotation AXROT.

De plus, le mécanisme de manœuvre 30 comprend un plateau de commande 40. Ce plateau de commande 40 peut posséder un anneau central 41 qui porte un bras 42 par pale 15. Le plateau de commande 40 a alors une forme d'étoile.

Le plateau de commande 40 est porté par la première extrémité 32 de la tige de commande. Le plateau de commande 40 est plus particulièrement monté tournant sur la tige de commande 31. Dès lors, le plateau de commande 40 est fixé à la première extrémité par un mécanisme de roulement 50.

Selon l'illustration de la figure 3, le mécanisme de roulement 50 est un mécanisme de roulement à billes 51. Le mécanisme de roulement 50 comporte alors deux cages intérieures 52 rendue solidaire en translation de la tige de commande. Par exemple, les deux cages intérieures 52 sont coincées selon l'axe de rotation AXROT entre une lèvre de la première extrémité 32 et une bague 35 vissée sur la première extrémité 32. Le mécanisme de roulement 50 comprend de plus une cage extérieure 53 qui entoure les cages intérieures 52, deux rangées de billes étant coincées radialement entre les cages intérieures 52 et la cage extérieure 53. La cage extérieure 53 est en outre rendue solidaire en rotation et en translation du plateau de commande 40. Par exemple, la cage extérieure 53 est vissée au plateau de commande 40.

Plusieurs configurations sont possibles : un roulement à deux rangées de billes tel que sur la figure 3, un roulement à deux rangées de rouleaux coniques, deux roulements à une rangée de billes, deux roulements à une rangée de rouleaux coniques...

Selon un autre aspect, le mécanisme de manœuvre 30 est muni d'une pluralité de bielles de pas 60, et par exemple d'une bielle de pas par pale. Au moins une bielle de pas peut être une bielle à longueur variable usuelle à des fins de réglage. Eventuellement, chaque bielle de pas 60 est parallèle à l'axe de rotation AXROT en projection sur un plan tangentiel au cercle centré sur cet axe de rotation AXROT.

Chaque bielle de pas 60 s'étend d'une première partie extrémale 61 articulée à un levier de pas 18 d'une pale 15 jusqu'à une deuxième partie extrémale 62 articulée à un bras 42 du plateau de commande 40. Un tel levier de pas 18 peut être solidaire du pied 16 d'une pale 15 par exemple.

Selon un aspect, chaque bielle de pas 60 peut être articulée à un levier de pas 16 par une première liaison rotule 63.

De plus, chaque bielle de pas 60 peut être articulée à un bras 42 par une deuxième liaison rotule 70.

Par exemple, une telle première liaison rotule ou deuxième liaison rotule comporte une bille qui est disposée dans une cage de rotule et qui est traversée diamétralement par une tige de rotule.

Par exemple, la cage de rotule d'une première liaison rotule est solidarisée à la première partie extrémale d'une bielle de pas et la tige de rotule est solidarisée à une chape à deux branches du levier de pas.

Selon un autre aspect, aucune cannelure ou aucun compas ne lie en rotation le plateau de commande 40 et le moyeu 10.

Néanmoins, le mécanisme de manœuvre 30 peut comporter un tube de positionnement angulaire 80. Ce tube de positionnement angulaire 80 est solidaire en rotation du plateau de commande 40. Ainsi, le tube de positionnement angulaire 80 s'étend selon sa longueur d'une première zone extrémale 81 solidaire du plateau de commande 40 et/ou du mécanisme de roulement 50 jusqu'à une deuxième zone extrémale 82.

Par exemple, l'anneau central 41 est pris en sandwich selon la direction de l'axe de rotation AX entre une lèvre de la deuxième zone extrémale 82 et une lèvre de la cage extérieure 53. Des boulons 200 ou équivalents traversent ainsi chacun le tube de positionnement angulaire 80, le plateau de commande 40 et la cage extérieure 53 pour les lier en rotation autour de l'axe de rotation AX et aussi en translation selon cet axe de rotation AX.

Selon un autre aspect, le tube de positionnement angulaire 80 et la tige de commande 31 peuvent être coaxiaux et/ou centrés sur l'axe de rotation AXROT. Eventuellement, le tube de positionnement angulaire 80 entoure la tige de commande 31 au moins localement.

Par ailleurs, la deuxième zone extrémale 82 est insérée dans un orifice 45 du moyeu 10. La deuxième zone extrémale peut traverser de part en part le moyeu 10.

Des paliers 110 ou équivalents peuvent être disposés entre la deuxième zone extrémale 82 et le moyeu 10. Par exemple, deux paliers 110 sont utilisés à cet effet.

De plus, le moyeu 10 et le tube de positionnement angulaire 80, et en particulier sa deuxième zone extrémale 82, sont liés par une liaison combinée 83. Cette liaison combinée a pour fonction d'induire une rotation autour de l'axe de rotation AXROT du tube de positionnement angulaire 80 et du plateau de commande 40 par rapport au moyeu 10 lorsque le tube de positionnement angulaire 80 est déplacé en translation par la tige de commande par rapport au moyeu 10.

La liaison combinée 83 peut comporter deux organes de guidage. Un des organes de guidage est un rail 84 et l'autre organe de guidage est un coulisseau 87 qui coulisse le long du rail 84. Dès lors, un des organes de guidage appartient au tube de positionnement angulaire 80 et l'autre appartient au moyeu 10.

Selon l'exemple de la figure 3, le rail 84 est un élément du tube de positionnement angulaire 80 alors que le coulisseau est solidaire du moyeu 10.

En référence à la figure 4, le rail 84 peut avoir une forme de haricot. Selon cette figure 4, le rail 84 est une gorge ménagée dans une paroi du tube de positionnement angulaire. Toutefois, le rail peut alternativement prendre la forme d'une lumière découpée dans cette paroi.

Selon une réalisation, le coulisseau 87 peut comporter un galet 870 sur lequel coulisse le rail 84 lorsque la tige de commande est déplacée en translation. Ce galet 870 est ainsi muni d'une tige centrale 871 autour de laquelle peut tourner un anneau tournant 873. Eventuellement, un roulement à aiguilles ou à billes ou à rouleaux 872 est disposé autour de la tige centrale 871, entre cette tige centrale 871 et l'anneau tournant 873.

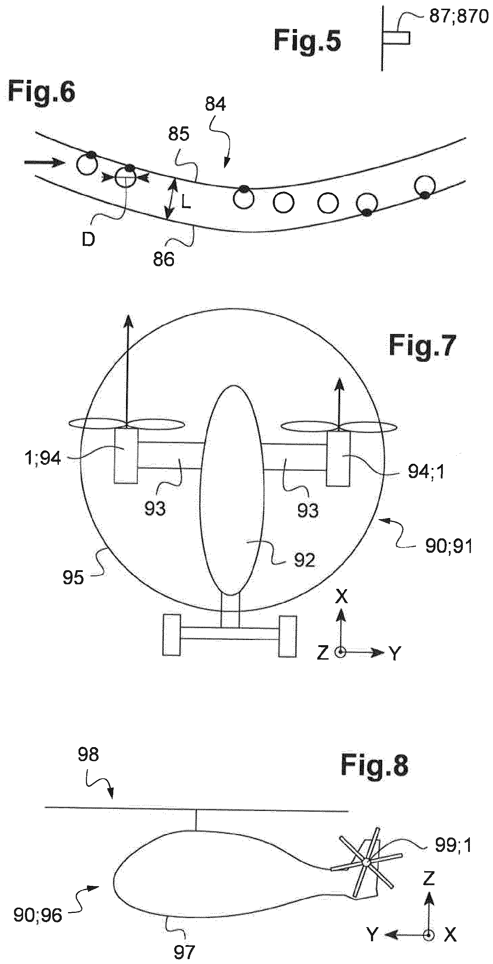

Selon la réalisation de la figure 5, le coulisseau 87 comporte un pion 870 agencé dans le rail.

Par ailleurs et en référence à la figure 6, le rail 84 peut comprendre deux flancs 85, 86 latéraux reliés entre eux pas au moins un voire deux tronçons d'extrémité. Les deux flancs 85, 86 sont parallèles l'un par rapport à l'autre et sont séparés par une largeur L.

Dès lors, le coulisseau 87 peut présenter un diamètre D inférieur à la largeur L. Ainsi, lorsque le coulisseau et le rail se déplacent l'un par rapport à l'autre, le coulisseau est en contact avec au maximum un flanc 85, 86.

La figure 6 illustre divers emplacements d'un coulisseau dans un rail.

Indépendamment de sa réalisation, le rotor à pas collectif variable 1 peut être installé sur de multiples supports. Le rotor à pas collectif variable 1 peut notamment être agencé sur de multiples véhicules tels que des navires ou encore des aéronefs.

Selon l'exemple de la figure 6, un aéronef hybride 91 comporte un fuselage 92 portant un rotor principal 95 participant au moins à la sustentation de cet aéronef hybride 91. De plus le fuselage porte au moins une demi-aile 93 sur laquelle est agencé au moins un propulseur à hélice 94. Par exemple, l'aéronef hybride comporte deux demi-ailes portant chacune un propulseur à hélice. Dès lors, au moins un propulseur à hélice 94 peut être un rotor à pas collectif variable 1 selon l'invention.

Selon l'exemple de la figure 7, un aéronef 90 est un hélicoptère 96. Cet hélicoptère comporte un fuselage 97 qui porte au moins un rotor principal participant au moins à sa sustentation. De plus, une queue du fuselage porte un rotor à pas collectif variable 99 selon l'invention qui participe au contrôle du mouvement en lacet de cet hélicoptère 96.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Rotor à pas collectif variable (1) mobile en rotation autour d'un axe de rotation (AXROT), ledit rotor à pas collectif variable (1) comprenant un moyeu (10), ledit rotor à pas collectif variable (1) comprenant une pluralité de pales (15), chaque pale (15) de ladite pluralité de pales (15) étant montée individuellement mobile sur le moyeu (10) au moins en pivotement autour d'un axe de variation de pas (AXPAS), ledit rotor à pas collectif variable (1) comprenant un mécanisme de manœuvre (30) pour faire varier simultanément un pas de chaque pale (15) de ladite pluralité de pales (15) autour de son axe de variation de pas (AXPAS), ledit mécanisme de manœuvre (30) comprenant une tige de commande (31) montée mobile en translation par rapport au moyeu (10), ledit mécanisme de manœuvre (30) comprenant un plateau de commande (40) monté tournant sur la tige de commande (31) par un mécanisme de roulement (50), ledit mécanisme de manœuvre (30) comprenant une pluralité de bielles de pas (60), chaque bielle de pas (60) de ladite pluralité de bielles de pas (60) étant articulée à un bras (42) du plateau de commande (40) et à un levier de pas (18) d'une dite pale (15),
**caractérisé en ce que** ledit mécanisme de manœuvre (30) comporte un tube de positionnement angulaire (80), ledit tube de positionnement angulaire (80) s'étendant d'une première zone extrémale (81) solidaire en rotation et en translation du plateau de commande (40) jusqu'à une deuxième zone extrémale (82), ladite deuxième zone extrémale (82) étant insérée dans un orifice (45) du moyeu (10), ledit moyeu (10) et le tube de positionnement angulaire (80) étant liés par une liaison combinée (83) ayant pour fonction d'induire une rotation autour de l'axe de rotation (AXROT) dudit tube de positionnement angulaire (80) et dudit plateau de commande (40) par rapport au moyeu (10) lors d'une translation du tube de positionnement angulaire (80) par rapport au moyeu (10).

2. Rotor à pas collectif variable selon la revendication 1,
**caractérisé en ce que** chaque bielle de pas (60) de ladite pluralité de bielles de pas (60) est articulée à un dit bras (42) par une première liaison rotule (70) et à un levier de pas (18) par une deuxième liaison rotule (63).

3. Rotor à pas collectif variable selon l'une quelconque des revendications 1 à 2,
**caractérisé en ce que** ledit tube de positionnement angulaire (80) et ladite tige de commande (31) sont coaxiaux.

4. Rotor à pas collectif variable selon l'une quelconque des revendications 1 à 3
**caractérisé en ce que** ledit tube de positionnement angulaire (80) et ladite tige de commande (31) sont centrés sur ledit axe de rotation (AXROT).

5. Rotor à pas collectif variable selon l'une quelconque des revendications 1 à 4,
**caractérisé en ce que** ledit tube de positionnement angulaire (80) entoure ladite tige de commande (31).

6. Rotor à pas collectif variable selon l'une quelconque des revendications 1 à 5,
**caractérisé en ce que** ladite liaison combinée (83) comporte deux organes de guidage incluant respectivement un rail (84) et un coulisseau (87) engagé sur le rail (84), un desdits deux organes de guidage étant solidaire du tube de positionnement angulaire (80) et un desdits deux organes étant solidaire du moyeu (10).

7. Rotor à pas collectif variable selon la revendication 6,
**caractérisé en ce que** le rail (84) a une forme de haricot.

8. Rotor à pas collectif variable selon l'une quelconque des revendications 6 à 7,
**caractérisé en ce que** le rail (84) appartient au tube de positionnement angulaire (80) et ledit coulisseau est solidaire du moyeu (10).

9. Rotor à pas collectif variable selon l'une quelconque des revendications 6 à 8,
**caractérisé en ce que** ledit coulisseau (87) comporte un pion (870) engagé dans le rail.

10. Rotor à pas collectif variable selon l'une quelconque des revendications 6 à 8,
**caractérisé en ce que** ledit coulisseau (87) comporte un galet (870) engagé dans le rail (84), le galet (870) étant muni d'une tige centrale (871) entourée d'un anneau tournant (873).

11. Rotor à pas collectif variable selon la revendication 10,
**caractérisé en ce que** le galet (870) comporte un roulement à aiguilles ou à billes ou à rouleaux (872) interposé entre ladite tige centrale (871) et ledit anneau tournant (873).

12. Rotor à pas collectif variable selon l'une quelconque des revendications 6 à 11,
**caractérisé en ce que** ledit rail (84) comprenant deux flancs (85, 86) parallèles l'un par rapport à l'autre séparés par une largeur (L), ledit coulisseau (87) présente un diamètre (D) inférieur à la largeur (L) pour être en contact avec au maximum un flanc (85, 86).

13. Aéronef (90),
**caractérisé en ce que** ledit aéronef (90) comporte au moins un rotor à pas collectif variable (1) selon l'une quelconque des revendications 1 à 12.

14. Aéronef selon la revendication 13,
**caractérisé en ce que** ledit aéronef (90) est un hélicoptère (96), ledit rotor à pas collectif (1) étant un rotor (99) participant au contrôle du mouvement en lacet de cet hélicoptère (96).

15. Aéronef selon la revendication 14,
**caractérisé en ce que** ledit aéronef (90) est un aéronef hybride (91) qui est muni d'un rotor principal (95) participant au moins à la sustentation de cet aéronef hybride (91) et d'au moins un propulseur à hélice (94), ledit au moins un rotor à pas collectif variable (1) étant un dit propulseur à hélice (94).

## Patentansprüche

1. Um eine Drehachse (AXROT) drehbarer Rotor (1) mit kollektiv variabler Flügelsteigung, wobei der Rotor (1) mit kollektiv variabler Flügelsteigung eine Nabe (10) umfasst, wobei der Rotor (1) mit kollektiv variabler Flügelsteigung eine Mehrzahl von Flügeln (15) umfasst, wobei jeder Flügel (15) der Mehrzahl von Flügeln (15) einzeln zumindest um eine Flügelsteigungsachse (AXPAS) schwenkend beweglich an der Nabe (10) montiert ist, wobei der Rotor (1) mit kollektiv variabler Flügelsteigung einen Stellmechanismus (30) zum gleichzeitigen Variieren einer Steigung jedes Flügels (15) der Mehrzahl von Flügeln (15) um seine Flügelsteigungsachse (AXPAS) aufweist, wobei der Stellmechanismus (30) eine Steuerstange (31) umfasst, die in Bezug auf die Nabe (10) verschiebbar montiert ist, wobei der Stellmechanismus (30) eine Steuerplatte (40) umfasst, die durch einen Lagermechanismus (50) drehbar auf der Steuerstange (31) montiert ist, wobei der Stellmechanismus (30) eine Mehrzahl von Steigungsstangen (60) umfasst, wobei jede Steigungsstange (60) der Mehrzahl von Steigungsstangen (60) an einen Arm (42) der Steuerplatte (40) und an einen Stellhebel (18) eines Flügels (15) angelenkt ist,
**dadurch gekennzeichnet, dass** der Stellmechanismus (30) ein Winkelpositionierungsrohr (80) umfasst, wobei sich das Winkelpositionierungsrohr (80) von einem ersten Endbereich (81), der in Rotation und Translation fest mit der Steuerplatte (40) verbunden ist, bis zu einem zweiten Endbereich (82) erstreckt, wobei der zweite Endbereich (82) in eine Öffnung (45) der Nabe (10) eingeführt ist, wobei die Nabe (10) und das Winkelpositionierungsrohr (80) durch eine kombinierte Verbindung (83) verbunden sind, die die Funktion hat, während einer Verschiebung des Winkelpositionierungsrohrs (80) in Bezug auf die Nabe (10) eine Drehung des Winkelpositionierungsrohrs (80) und der Steuerplatte (40) in Bezug auf die Nabe (10) um die Drehachse (AXROT) hervorzurufen.

2. Rotor mit kollektiv variabler Flügelsteigung nach Anspruch 1,
**dadurch gekennzeichnet, dass** jede Steigungsstange (60) der Mehrzahl von Steigungsstangen (60) durch ein erstes Kugelgelenk (70) an einen der genannten Arme (42) und durch ein zweites Kugelgelenk (63) an einen Steigungshebel (18) angelenkt ist.

3. Rotor mit kollektiv variabler Flügelsteigung nach einem der Ansprüche 1 bis 2,
**dadurch gekennzeichnet, dass** das Winkelpositionierungsrohr (80) und die Steuerstange (31) koaxial sind.

4. Rotor mit kollektiv variabler Flügelsteigung nach einem der Ansprüche 1 bis 3,
**dadurch gekennzeichnet, dass** das Winkelpositionierungsrohr (80) und die Steuerstange (31) auf die Drehachse (AXROT) zentriert sind.

5. Rotor mit kollektiv variabler Flügelsteigung nach einem der Ansprüche 1 bis 4,
**dadurch gekennzeichnet, dass** das Winkelpositionierungsrohr (80) die Steuerstange (31) umgibt.

6. Rotor mit kollektiv variabler Flügelsteigung nach einem der Ansprüche 1 bis 5,
**dadurch gekennzeichnet, dass** die kombinierte Verbindung (83) zwei Führungselemente umfasst, die jeweils eine Schiene (84) und einen mit der Schiene (84) in Eingriff stehenden Schlitten (87) umfassen, wobei eines der beiden Führungselemente mit dem Winkelpositionierungsrohr (80) und eines der beiden Elemente mit der Nabe (10) fest verbunden ist.

7. Rotor mit kollektiv variabler Flügelsteigung nach Anspruch 6,
**dadurch gekennzeichnet, dass** die Schiene (84) bohnenförmig ist.

8. Rotor mit kollektiv variabler Flügelsteigung nach einem der Ansprüche 6 bis 7,
**dadurch gekennzeichnet, dass** die Schiene (84) zu dem Winkelpositionierungsrohr (80) gehört und der Schlitten mit der Nabe (10) fest verbunden ist.

9. Rotor mit kollektiv variabler Flügelsteigung nach einem der Ansprüche 6 bis 8,
**dadurch gekennzeichnet, dass** der Schlitten (87) einen Stift (870) umfasst, der in die Schiene eingreift.

10. Rotor mit kollektiv variabler Flügelsteigung nach einem der Ansprüche 6 bis 8,
**dadurch gekennzeichnet, dass** der Schlitten (87) eine Rolle (870) umfasst, die in die Schiene (84) eingreift, wobei die Rolle (870) mit einer zentralen Stange (871) versehen ist, die von einem drehbaren Ring (873) umgeben ist.

11. Rotor mit kollektiv variabler Flügelsteigung nach Anspruch 10,
**dadurch gekennzeichnet, dass** die Rolle (870) ein Nadel- oder Kugel- oder Rollenlager (872) umfasst, das zwischen der zentralen Welle (871) und dem drehbaren Ring (873) angeordnet ist.

12. Rotor mit kollektiv variabler Flügelsteigung nach einem der Ansprüche 6 bis 11,
**dadurch gekennzeichnet, dass** die Schiene (84) zwei zueinander parallele Flanken (85, 86) umfasst, die durch eine Breite (L) getrennt sind, wobei der Schlitten (87) einen Durchmesser (D) aufweist, der kleiner als die Breite (L) ist, um mit höchstens einer Flanke (85, 86) in Kontakt zu sein.

13. Luftfahrzeug (90),
**dadurch gekennzeichnet, dass** das Luftfahrzeug (90) mindestens einen Rotor mit kollektiv variabler Flügelsteigung nach einem der Ansprüche 1 bis 12 aufweist.

14. Luftfahrzeug nach Anspruch 13,
**dadurch gekennzeichnet, dass** das Luftfahrzeug (90) ein Hubschrauber (96) ist, wobei der Rotor (1) mit kollektiv variabler Flügelsteigung ein Rotor (99) ist, der an der Steuerung der Gierbewegung des Hubschraubers (96) teilhat.

15. Luftfahrzeug nach Anspruch 14,
**dadurch gekennzeichnet, dass** das Luftfahrzeug (90) ein Hybridluftfahrzeug (91) ist, das einen Hauptrotor (95), der zumindest am Auftrieb dieses Hybridluftfahrzeugs (91) beteiligt ist, und mindestens einen Propellerantrieb (94) aufweist, wobei der mindestens eine Rotor (1) mit variabler kollektiver Steigung ein solcher Propellerantrieb (94) ist.

## Claims

1. Rotor with variable collective pitch (1) rotatable about an axis of rotation (AXROT), said rotor with variable collective pitch (1) comprising a hub (10), said rotor with variable collective pitch (1) comprising a plurality of blades (15), each blade (15) of said plurality of blades (15) being individually movably mounted on the hub (10) at least pivotably about a pitch variation axis (AXPAS), said rotor with variable collective pitch (1) comprising an operating mechanism (30) for simultaneously varying a pitch of each blade (15) of said plurality of blades (15) about its pitch variation axis (AXPAS), said operating mechanism (30) comprising a control rod (31) mounted mobile in translation in relation to the hub (10), said operating mechanism (30) comprising a swash plate (40) rotatably mounted on the control rod (31) by a rolling mechanism (50), said operating mechanism (30) comprising a plurality of pitch rods (60), each pitch rod (60) of said plurality of pitch rods (60) being hinged to an arm (42) of the swash plate (40) and to a pitch lever (18) of a said blade (15), **characterised in that** said operating mechanism (30) comprises an angle positioning tube (80), said angle positioning tube (80) extending from a first extreme zone (81) rotationally and translationally integral with the swash plate (40) as far as a second extreme zone (82), said second extreme zone (82) being inserted in a hole (45) of the hub (10), said hub (10) and the angle positioning tube (80) being connected by a combined link (83) having the function of causing a rotation about the axis of rotation (AXROT) of said angle positioning tube (80) and of said swash plate (40) in relation to the hub (10) when there is a translation of the angle positioning tube (80) in relation to the hub (10).

2. Rotor with variable collective pitch according to claim 1, **characterised in that** each pitch rod (60) of said plurality of pitch rods (60) is hinged to a said arm (42) by a first ball joint (70) and to a pitch lever (18) by a second ball joint (63).

3. Rotor with variable collective pitch according to either claim 1 or claim 2, **characterised in that** said angle positioning tube (80) and said control rod (31) are coaxial.

4. Rotor with variable collective pitch according to any one of claims 1 to 3 **characterised in that** said angle positioning tube (80) and said control rod (31) are centred on said axis of rotation (AXROT).

5. Rotor with variable collective pitch according to any one of claims 1 to 4, **characterised in that** said angle positioning tube (80) surrounds said control rod (31).

6. Rotor with variable collective pitch according to any one of claims 1 to 5, **characterised in that** said combined link (83) comprises two guide members respectively including a rail (84) and a slider (87) retained on the rail (84), one of said two guide members being integral with the angular positioning tube (80) and one of said two members being integral with the hub (10).

7. Rotor with variable collective pitch according to claim 6, **characterised in that** the rail (84) is kidney shaped.

8. Rotor with variable collective pitch according to either claim 6 or claim 7, **characterised in that** the rail (84) belongs to the angular positioning tube (80) and said slider is integral with the hub (10).

9. Rotor with variable collective pitch according to any one of claims 6 to 8, **characterised in that** said slider (87) comprises a pin (870) retained in the rail.

10. Rotor with variable collective pitch according to any one of claims 6 to 8, **characterised in that** said slider (87) comprises a roller (870) retained in the rail (84), the roller (870) being provided with a central rod (871) surrounded by a rotating ring (873).

11. Rotor with variable collective pitch according to claim 10, **characterised in that** the roller (870) comprises a needle bearing or ball bearing or roller bearing (872) interposed between said central rod (871) and said rotating ring (873).

12. Rotor with variable collective pitch according to any one of claims 6 to 11, **characterised in that** said rail (84) comprises two flanks (85, 86) parallel to one another separated by a width (L), said slider (87) having a diameter (D) that is less than the width (L) to allow contact with a maximum of one flank (85, 86).

13. Aircraft (90), **characterised in that** said aircraft (90) comprises at least one rotor with variable collective pitch (1) according to any one of claims 1 to 12.

14. Aircraft according to claim 13, **characterised in that** said aircraft (90) is a helicopter (96), said rotor with variable collective pitch (1) being a rotor (99) involved in controlling the yawing of this helicopter (96).

15. Aircraft according to claim 14, **characterised in that** said aircraft (90) is a hybrid aircraft (91) provided with a main rotor (95) involved in at least the lifting of this hybrid aircraft (91) and at least one screw propeller (94), said at least one rotor with variable collective pitch (1) being a said screw propeller (94).
